# DEMANDE DE BREVET EUROPEEN

(11) **EP 3 381 730 A1**
(43) Date de publication de la demande: **03.10.2018**
(21) Numéro de dépôt: 18164351.1
(22) Date de dépôt: 27.03.2018
(51) Int. Cl.: B60K 15/03

(54) **RÉSERVOIR À CARBURANT SOUS PRESSION DE VÉHICULE AUTOMOBILE HYBRIDE**

(30) Priorité: 27.03.2017 FR 1752526
(71) Demandeur: RM Technologies, 53960 Bonchamp les Laval (FR)
(72) Inventeur: RUNARVOT, Hervé, 53260 ENTRAMMES (FR); MALISKA, Olivier, Jean, Denis, 53000 LAVAL (FR)
(74) Mandataire: Vidon Brevets & Stratégie

(57) **Abrégé**

L'invention concerne un réservoir à carburant (1) sous pression pour un véhicule automobile de type hybride, ledit réservoir à carburant (1) étant constitué d'une coque (11) rigide à l'intérieur de laquelle est contenu le carburant.

Selon l'invention, la coque (11) est en une matière plastique à base de polyamide, et en ce qu'au moins une des surfaces extérieures de la coque (11) comprend au moins une forme (15_{A}, 15_{B}) destinée à rigidifier la coque (11).

## Description

### 1 DOMAINE TECHNIQUE

L'invention concerne un réservoir à carburant pour un véhicule automobile de type hybride, c'est-à-dire comprenant à la fois un moteur thermique (à combustion interne) et un moteur électrique pour sa propulsion, et en particulier les véhicules hybrides rechargeables ("PHEV" en anglais).

### 2 ARRIERE-PLAN TECHNOLOGIQUE

Dans un véhicule hybride, et en particulier un véhicule hybride rechargeable, le réservoir de carburant est généralement du type pressurisé (la mise à l'air est fermée) et conçu pour retenir une partie des vapeurs de carburant avant qu'elles ne soient transférées et stockées dans un absorbeur de vapeur d'hydrocarbures, appelé canister, ou bien transférées vers le moteur.

Une vanne située entre le réservoir et le canister permet de maintenir les vapeurs de carburant au sein du réservoir pour éviter de trop solliciter le canister durant toutes les phases de roulage en mode électrique, mais a pour effet de faire monter en pression le réservoir.

Lorsque le véhicule présente une forte autonomie et fonctionne en mode électrique pendant de longues périodes (le moteur thermique restant dans ce cas à l'arrêt), la pression à l'intérieur du réservoir peut atteindre typiquement une valeur de l'ordre de -250 à +480 mbar.

Il en résulte que ces réservoirs pressurisés doivent présenter, par rapport aux réservoirs à carburant traditionnels des véhicules à moteur thermique, une résistance mécanique améliorée, de sorte à résister aux pressions s'appliquant sur la surface intérieure du réservoir et éviter ainsi toute déformation de la paroi du réservoir, ce qui pourrait s'avérer dangereux ou rendre non fonctionnel celui-ci.

La majorité des véhicules hybrides sont équipés d'un réservoir métallique d'épaisseur importante, ce qui augmente considérablement le poids du réservoir et ainsi augmente la consommation de carburant et les émissions de gaz d'échappement.

Il a également été proposé des réservoirs en matière plastique, tels qu'en polyéthylène multicouche.

Les réservoirs en matière plastique sont certes plus faciles à fabriquer et plus légers que les réservoirs métalliques.

Ils présentent toutefois comme inconvénient le fait que des déformations irréversibles peuvent apparaître suite à des fluctuations de température et de pression. Par exemple, en fonction de la température extérieure, des déformations de la paroi du réservoir peuvent survenir du fait du gonflement ou de la rétractation de l'air intérieur.

Pour répondre à ces problèmes, ces réservoirs en plastique présentent une épaisseur importante et/ou mettent en oeuvre des renforts internes, sous forme de cloisons, par exemple.

Toutefois, ces solutions grèvent généralement le poids du réservoir en plastique, réduisent son volume utile et augmentent son coût de fabrication.

### 3 RESUME

La présente invention a pour objet de résoudre ces problèmes de l'état de l'art en proposant un réservoir à carburant sous pression pour un véhicule automobile de type hybride, ledit réservoir à carburant étant constitué d'une coque rigide à l'intérieur de laquelle est contenu le carburant.

Selon l'invention, la coque est en une matière plastique à base de polyamide, et au moins une des surfaces extérieures de la coque comprend au moins une forme destinée à rigidifier la coque.

Ainsi, la coque du réservoir pressurisé de l'invention est en polyamide et présente une ou plusieurs formes de rigidification aménagée sur sa surface externe.

L'approche de l'invention consiste donc à fabriquer la coque en polyamide et à augmenter le moment d'inertie du réservoir (c'est-à-dire la résistance qu'oppose le réservoir à sa mise en mouvement) par la mise en oeuvre de formes, assurant une fonction de rigidification de la coque, afin d'améliorer la tenue du réservoir à la pression et à la dépression.

Un tel réservoir est ainsi conçu pour résister aux pressions (positives et négatives) internes dues aux contractions et dilatations des vapeurs de carburant au sein de la coque et éviter ainsi d'éventuelles déformations de la paroi de la coque.

Le réservoir de l'invention est particulièrement adapté pour être mis en oeuvre dans les véhicules hybrides, et notamment les véhicules hybrides rechargeables ("PHEV").

De façon avantageuse, le réservoir de l'invention ne met pas en oeuvre de renforts internes, si bien que le volume utile de la coque est maximisé.

Ces formes, qui peuvent être des nervures, par exemple, et qui constituent des renforts ou raidisseurs, sont disposées au moins en partie sur une ou plusieurs surfaces extérieures planes de la coque du réservoir présentant une surface supérieure ou égale à 100 cm².

La force exercée sur une paroi étant, de manière connue, fonction de sa surface, il est proposé de prévoir des formes sur les surfaces planes de la coque présentant une superficie supérieure ou égale à une valeur prédéterminée.

Selon un aspect particulier de l'invention, ladite au moins une forme prend la forme d'une nervure.

Selon un aspect particulier de l'invention, ladite nervure est de section carrée.

Selon un aspect particulier de l'invention, ladite nervure est de section trapézoïdale ou rectangulaire.

Selon un aspect particulier de l'invention, la coque comprend sur sa surface inférieure un premier creux de forme tronconique et sur sa surface supérieure un deuxième creux de forme tronconique, les surfaces de fond des premier et deuxième creux étant en contact de sorte à former un plot de recollement.

Selon un aspect particulier de l'invention, la surface inférieure de la coque, formant le fond du réservoir lorsqu'il est mis en oeuvre dans un véhicule automobile, comprend au moins une surface de fond, ladite au moins une forme étant ménagée sur ladite au moins une surface de fond de ladite coque.

Selon un aspect particulier de l'invention, ladite nervure s'étend entre une première surface de fond et une deuxième surface de fond de ladite coque.

Selon un aspect particulier de l'invention, ladite coque est en polyamide 6.

Selon un aspect particulier de l'invention, ladite coque est obtenue par soufflage.

Dans un mode de mise en oeuvre particulier de l'invention, ladite au moins une forme prend la forme d'un gaufrage.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 est une vue en perspective de dessus d'un réservoir à carburant conforme à l'invention,
- la figure 2 est une vue de dessous du réservoir à carburant de la figure 1,
- les figures 3A à 3C illustrent différentes formes de renforts mis en oeuvre dans un réservoir à carburant conforme à l'invention,
- la figure 4 est une vue en perspective de dessous d'un autre réservoir à carburant conforme à l'invention.

### 5 DESCRIPTION DETAILLEE DE L'INVENTION

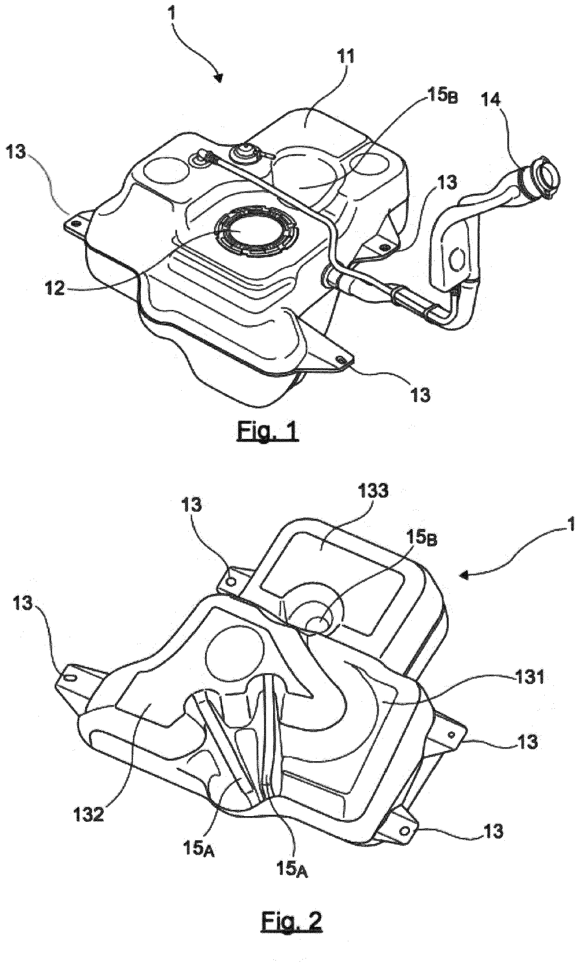

On a représenté sur la figure 1, en perspective, un réservoir à carburant 1 sous pression de véhicule automobile, qui est constitué d'une coque 11 rigide dont l'espace intérieur constitue une enceinte étanche pour le stockage d'un carburant.

Le carburant auquel est destiné le réservoir selon l'invention peut être de l'essence, du gazole, ou un biocarburant, et peut avoir une teneur en alcool comprise entre 0 et 100%.

Il présente sur un côté une goulotte de remplissage 14 et, sur une surface supérieure, un orifice de vidange obturé par un bouchon de fermeture 12 amovible.

Il est, par ailleurs, muni de plusieurs pattes 13 destinées à fixer le réservoir à carburant 1 au moyen de vis à la caisse du véhicule.

Le réservoir à carburant 1 présente ici une forme complexe.

Selon l'invention, le réservoir à carburant 1 est fabriqué en matière polyamide.

Un exemple de polyamide est, de manière non limitative, le polyamide de type 6. Il présente des caractéristiques mécaniques et chimiques supérieures

Le réservoir à carburant 1 en polyamide est obtenu par moulage, et en particulier par soufflage.

En complément, la coque 11 du réservoir à carburant 1 présente une ou plusieurs formes spécifiques qui permettent de rigidifier le réservoir. Ces formes sont des déformations de la paroi de la coque 11.

Sur la vue de dessous de la figure 2, deux nervures 15_{A} formant un V sont ainsi ménagées sur la surface inférieure de la coque 11 (formant le fond du réservoir lorsqu'il est mis en oeuvre dans un véhicule automobile), du côté extérieur, entre un premier fond 131 plat et un deuxième fond 132 plat qui sont situés dans deux plans différents.

Un premier creux 15_{B} de forme tronconique est, par ailleurs, ménagé dans un troisième fond plat s'étendant encore dans un autre plan.

Un deuxième creux 15_{B} de forme identique est ménagé sur la face supérieure de la coque 11, en vis-à-vis du premier creux 15_{B} de sorte que la surface de fond du deuxième creux 15_{B} soit en contact avec la surface de fond du premier creux 15_{B}, les premier et deuxième creux 15_{B} formant un plot de recollement.

Un tel plot de recollement, formé entre la face supérieure et la face inférieure du corps creux de la coque 11 est destiné à améliorer la rigidité de la coque 11.

Les deux surfaces de fond formant le plot de recollement sont soudées par compression dans le moule lors de la fabrication de la coque 11.

Le réservoir à carburant 1 sous pression conforme à l'invention est particulièrement adapté pour être mis en oeuvre dans les véhicules hybrides rechargeables ("PHEV").

Il présente un poids réduit comparé à un réservoir similaire métallique, ce qui permet des économies de carburant et une réduction des émissions de CO2.

Du fait qu'il soit fabriqué dans un matériau polyamide, il peut présenter une forme complexe et compacte de sorte à s'intégrer parfaitement à l'architecture véhicule, tout en assurant une résistance chimique optimale.

La mise en oeuvre de renforts sur sa surface extérieure optimise sa capacité de stockage en carburant et sa résistance mécanique.

Il est ainsi adapté pour résister à-des pressions comprises entre -250 et +480 mbar sur sa paroi intérieure.

La présence de ces renforts permet également de diminuer les épaisseurs du réservoir donnant lieu à une réduction du poids et une augmentation du volume utile.

Dans un mode de réalisation particulier de l'invention, la ou les formes de rigidification sont chacune aménagées au moins en partie sur une surface extérieure plane de la coque 11 qui présente une surface supérieure ou égale à 100 cm².

Une telle forme peut ainsi s'étendre en totalité ou partiellement sur une surface extérieure plane de la coque 11 qui présente une surface supérieure ou égale à 100 cm².

Elle peut, par exemple, s'étendre en partie sur deux surfaces extérieures planes de la coque 11 qui présentent chacune une surface supérieure ou égale à 100 cm², et entre ces deux surfaces, comme illustré sur la figure 2.

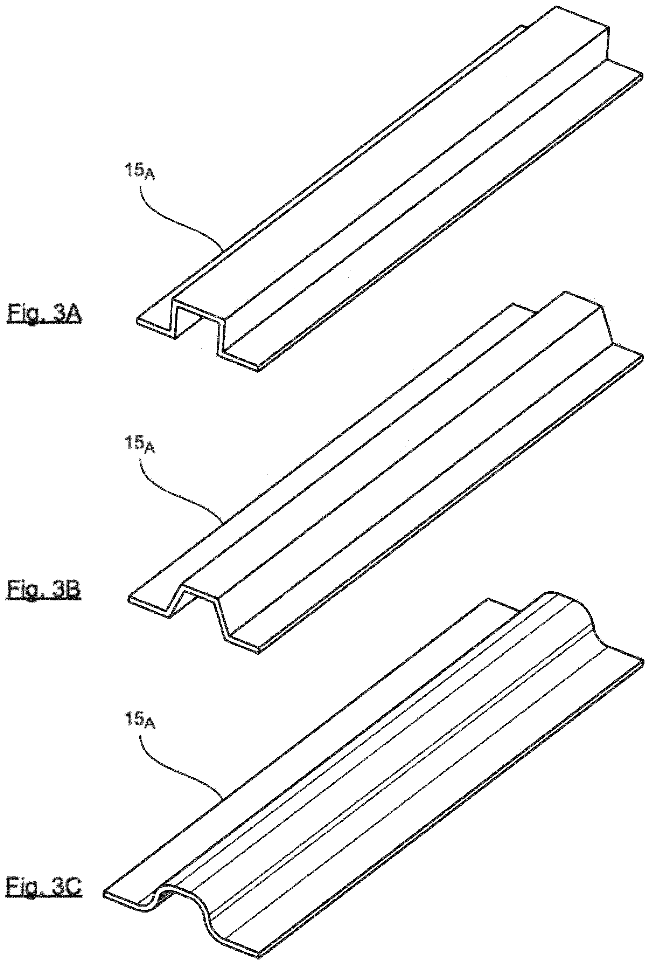

Les figures 3A à 3C illustrent différentes formes de renforts mis en oeuvre dans un réservoir à carburant conforme à l'invention.

Les renforts sont ici des nervures 15_{A} qui sont, par exemple, de section carrée, rectangulaire (figure 3A), trapézoïdale droite (figure 3B) ou trapézoïdale arrondie (figure 3C).

Dans certain cas de réservoir présentant une forme plutôt plate et large, il pourra être nécessaire d'ajouter des sangles métalliques pour limiter la déformation.

La géométrie des formes de rigidification, et en particulier des creux et des nervures, n'est pas limitée à celles illustrées sur les figures.

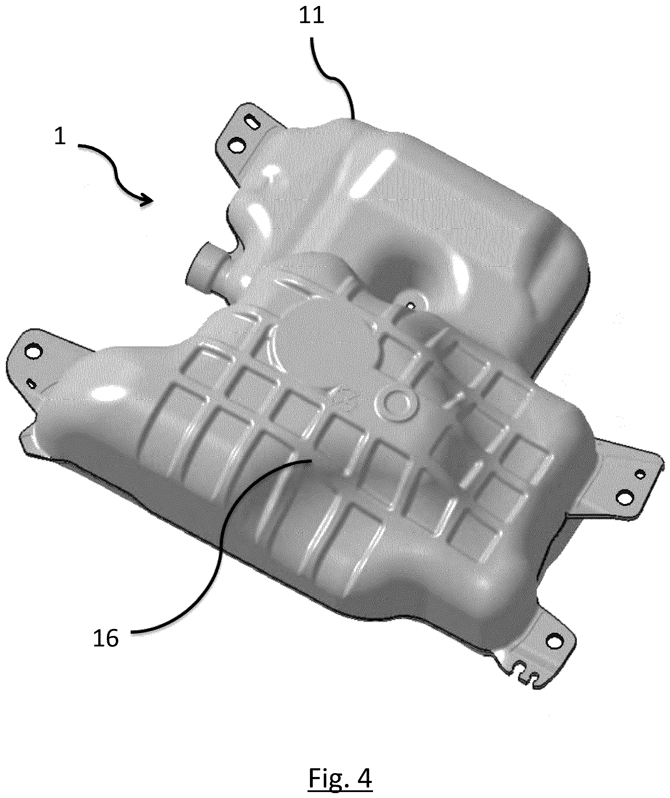

La figure 4 est une vue en perspective de dessous d'un autre réservoir à carburant conforme à l'invention.

La coque 11 de ce réservoir 1 présente sur sa surface extérieure inférieure une forme constituée par un gaufrage 16.

Ce gaufrage 16 est constitué de motifs en relief obtenus par déformation de la paroi de la coque 11, et permet d'optimiser la tenue à la pression et à la dépression de la coque 11.

La coque 11 peut également présenter un gaufrage sur sa surface extérieure supérieure.

Ce ou ces gaufrages peuvent être combinés ou non à un ou plusieurs renforts tels que décrits précédemment.

## Revendications

1. Réservoir à carburant (1) sous pression pour un véhicule automobile de type hybride, ledit réservoir à carburant (1) étant constitué d'une coque (11) rigide à l'intérieur de laquelle est contenu le carburant,
**caractérisé en ce que** la coque (11) est en une matière plastique à base de polyamide, et **en ce qu'**au moins une des surfaces extérieures de la coque (11) comprend au moins une forme (15_{A}, 15_{B},, 16) destinée à rigidifier la coque (11).

2. Réservoir à carburant (1) sous pression selon la revendication 1, **caractérisé en ce que** ladite au moins une forme (15_{A}, 15_{B}) est aménagée au moins en partie sur au moins une surface extérieure plane de la coque (11) présentant une surface supérieure ou égale à 100 cm².

3. Réservoir à carburant (1) sous pression selon la revendication 1 ou 2, **caractérisé en ce que** ladite au moins une forme (15_{A}, 15_{B}) prend la forme d'une nervure (15_{A}).

4. Réservoir à carburant (1) sous pression selon la revendication 3, **caractérisé en ce que** ladite nervure (15_{A}) est de section carrée ou rectangulaire.

5. Réservoir à carburant (1) sous pression selon la revendication 3, **caractérisé en ce que** ladite nervure (15_{A}) est de section trapézoïdale.

6. Réservoir à carburant (1) sous pression selon l'une des revendications 1 à 5, **caractérisé en ce que** la coque (11) comprend sur sa surface inférieure un premier creux (15_{B}) de forme tronconique et sur sa surface supérieure un deuxième creux (15_{B}) de forme tronconique, les surfaces de fond des premier et deuxième creux (15_{B}) étant en contact de sorte à former un plot de recollement.

7. Réservoir à carburant (1) sous pression selon l'une des revendications 1 à 6, **caractérisé en ce que** la surface inférieure de la coque (11), formant le fond du réservoir lorsqu'il est mis en oeuvre dans un véhicule automobile, comprend au moins une surface de fond (131, 132, 133), ladite au moins une forme (15_{A}, 15_{B}) étant ménagée sur ladite au moins une surface de fond (131, 132, 133) de ladite coque (11).

8. Réservoir à carburant (1) sous pression selon la revendication 7 lorsqu'elle dépend de l'une des revendications 3 à 5, **caractérisé en ce que** ladite nervure (15_{A}) s'étend entre une première surface de fond (131) et une deuxième surface de fond (132) de ladite coque (11).

9. Réservoir à carburant (1) sous pression selon l'une des revendications 1 à 8, **caractérisé en ce que** ladite coque (11) est en polyamide 6.

10. Réservoir à carburant (1) sous pression selon l'une des revendications 1 à 9, **caractérisé en ce que** ladite coque (11) est obtenue par soufflage.

11. Réservoir à carburant (1) sous pression selon la revendication 1, **caractérisé en ce que** ladite au moins une forme prend la forme d'un gaufrage (16).
